# FASCICULE DE BREVET EUROPEEN

(11) **EP 1 262 633 B1**
(45) Date de publication et mention de la délivrance du brevet: **16.03.2005**
(21) Numéro de dépôt: 02291315.6
(22) Date de dépôt: 30.05.2002
(51) Int. Cl.: F01D 5/22, F01D 5/20, F01D 11/02, F01D 11/08

(54) **Aube de turbine avec léchette d'étanchéité**
Turbinenschaufel mit Labyrinthschneidendichtung
Turbine blade with knife edge sealing

(30) Priorité: 31.05.2001 FR 0107122
(43) Date de publication de la demande: 04.12.2002
(73) Titulaire: Snecma Moteurs, 75015 Paris (FR)
(72) Inventeur: Giot, Chantal, 77380 Combs la Ville (FR); Soupizon, Jean-Luc, 77000 Vaux le Pénil (FR)

(56) Documents cités:
- EP-A- 0 287 371
- WO-A-02/25065
- DE-A- 10 040 431
- FR-A- 1 330 657
- FR-A- 2 615 254
- SU-A- 792 014
- US-A- 3 339 933
- US-A- 3 545 882

## Description

L'invention concerne une aube d'un étage mobile de rotor de turbine comportant un côté intrados et un côté extrados disposés de part et d'autre d'un axe d'aube, ladite aube comportant en outre un talon situé à son extrémité périphérique externe et au moins une léchette d'étanchéité formée sur ledit talon, ladite léchette d'étanchéité étant disposée transversalement aux côtés intrados et extrados et présentant une première portion d'extrémité côté extrados et une seconde portion d'extrémité côté intrados, ladite première portion d'extrémité ayant une hauteur plus importante que la hauteur de ladite seconde portion d'extrémité, ladite léchette présentant un sommet de léchette entre lesdites première et seconde portions d'extrémité.

Les performances des turbomachines, destinées à l'aviation ou autres productions industrielles, sont continuellement améliorées. Par exemple, il est possible d'accroître l'efficacité d'un étage de turbine ou de compression constitués d'aubes mobiles, en améliorant l'étanchéité entre le rotor et le stator aux extrémités des aubes et en assurant une adaptation en fonctionnement des pièces mobiles et fixes.

Suivant les conditions de fonctionnement du moteur, certains phénomènes d'instabilité vibratoire des aubes mobiles ont été observés. Notamment, des vibrations peuvent provenir des conditions d'écoulement aérodynamique au niveau des sommets d'aubes.

Généralement, il existe un jeu entre le sommet des aubes et le stator associé. En fonctionnement, des frottements entre les aubes et la virole, pouvant conduire à des détériorations au niveau des extrémités d'aubes et/ou de la surface de la virole et à la variation du jeu précité, apparaissent pour plusieurs raisons. En effet, d'une part, le rotor et la virole qui lui est concentrique n'ont pas des formes parfaitement circulaires. D'autre part, il existe des variations de dilatation thermique différentielles entre le rotor et la virole. Et enfin, des déformations mécaniques proviennent des contraintes qui s'exercent sur les pièces mobiles de rotor ou sur les pièces fixes du stator associé.

Pour diminuer ces frottements, il est connu de placer des garnitures d'étanchéité et d'usure formés de matériaux "abradables" sur les surfaces internes du stator en regard des aubes mobiles. Ces surfaces sont abradables ce qui signifie qu'elles sont revêtues d'un matériau qui va s'user ou s'abraser en fonction du passage des aubes jusqu'à s'accommoder avec celles-ci. Les aubes sont alors munies de léchettes sur leur périphérie qui sont destinées à coopérer avec les garnitures abradables. Les léchettes se présentent sous la forme d'éléments profilés en matériau abrasif, un tel dispositif est décrit dans le document EP-A-287 371.

Il est connu de placer les léchettes en dent de scie d'une aube à l'autre pour éviter leur usure. Cependant, ces léchettes présentent un sommet rectiligne qui entraîne une section de fuites résiduelles importante.

Le but de l'invention est de proposer des aubes comportant des léchettes qui permettent de diminuer cette section de fuites résiduelles permettant ainsi d'augmenter le rendement de la turbine et donc de diminuer la consommation spécifique du moteur.

L'invention atteint son but par le fait que le sommet de léchette présente une surface convexe qui s'étend entre les première et seconde portions d'extrémité.

Le sommet de la léchette étant convexe, la section disponible entre le sommet et la surface de la virole se trouve diminuée.

La surface convexe présente avantageusement, une section transversale circulaire ayant un axe médian, un centre et un rayon.

Pour faciliter la réalisation des léchettes, il est avantageux de choisir un arc de cercle comme forme de sommet.

Avantageusement, l'axe médian est écarté d'un angle par rapport à l'axe d'aube, l'angle étant orienté du côté intrados vers le côté extrados et par le fait que le centre est excentré d'une distance mesurée perpendiculaire à l'axe d'aube.

La première portion d'extrémité est de hauteur plus importante que la seconde portion d'extrémité de manière à garder l'effet dent de scie entre deux aubes consécutives. De ce fait, il est nécessaire d'orienter la courbure de l'arc de cercle si on souhaite relier les deux portions d'extrémité entre-elles avec la seule et unique surface curviligne.

La distance est avantageusement au moins égale à la moitié de l'écartement entre ladite première portion d'extrémité et ladite seconde portion d'extrémité.

Pour avoir une dépouille de la léchette qui permette d'éviter son usure, il est préférable d'écarter le centre de courbure du sommet d'un demi-pas par rapport à l'axe d'aube.

Avantageusement, la différence de hauteur entre ladite première portion d'extrémité et ladite seconde portion d'extrémité est d'au moins 0,2mm.

Cette différence de hauteur permet de conserver l'effet dent de scie entre deux aubes consécutives.

L'aube comporte avantageusement deux léchettes sensiblement parallèles de manière à générer un labyrinthe pour l'air qui circule entre les aubes et la virole, permettant de diminuer les instabilités vibratoires.

D'autres caractéristiques et avantages de l'invention ressortiront à la lecture de la description suivante faite à titre d'exemple non limitatif et en référence aux dessins annexés dans lesquels :
- la figure 1 est une vue en perspective d'une aube de turbine comportant deux léchettes,
- la figure 2 est une vue de dessus de la figure 1,
- la figure 3 est une coupe transversale de plusieurs aubes montées sur un rotor disposé dans une virole, et

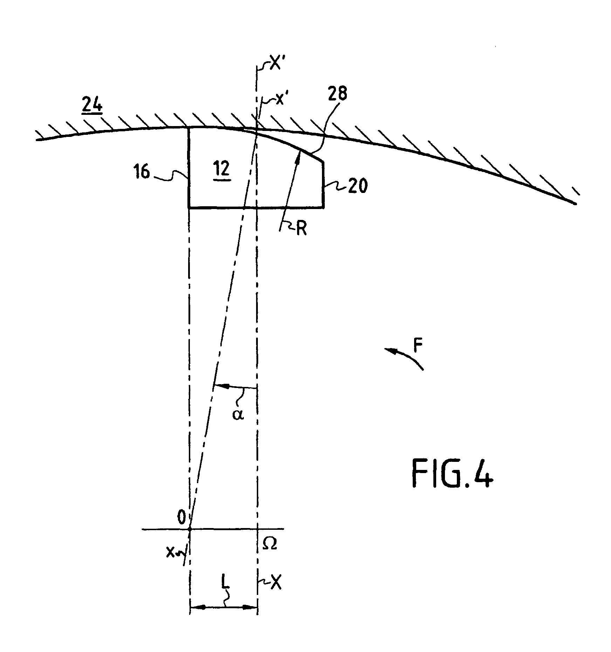

- la figure 4 est une vue simplifiée montrant une aube en contact avec la virole.

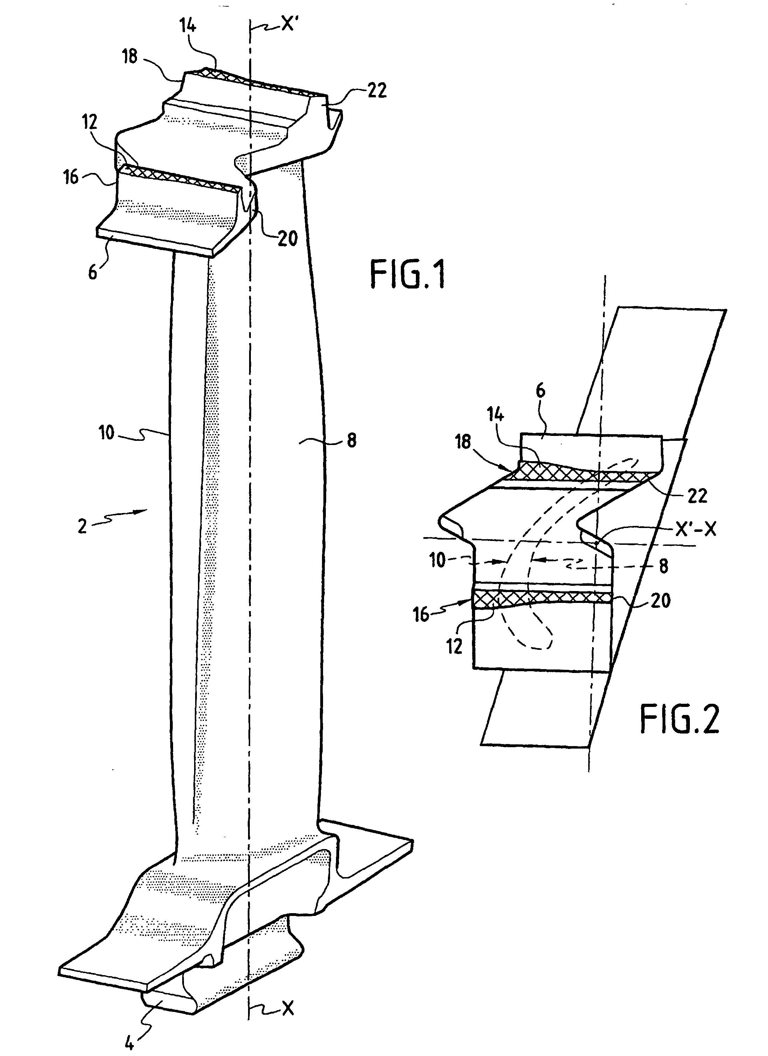

La figure 1 montre une aube 2 de turbomachine qui comporte un pied d'aube 4 à son extrémité interne et un talon 6 à son extrémité périphérique externe. Pour favoriser l'écoulement axial, l'aube 2 s'étend le long d'un axe d'aube X-X' perpendiculaire à l'axe du rotor sur lequel est montée ladite aube 2, selon un profilé ayant un côté intrados 8 et un côté extrados 10. Deux léchettes 12 et 14 sont formées sur la face externe du talon 6.

Les figures 1 et 2 montrent que les léchettes 12 et 14 sont disposées transversalement aux côtés intrados 8 et extrados 10. Les léchettes 12 et 14 ont chacune une première portion d'extrémité 16, respectivement 18, située côté extrados 10 et une seconde portion d'extrémité 20, respectivement 22, située côté intrados 8.

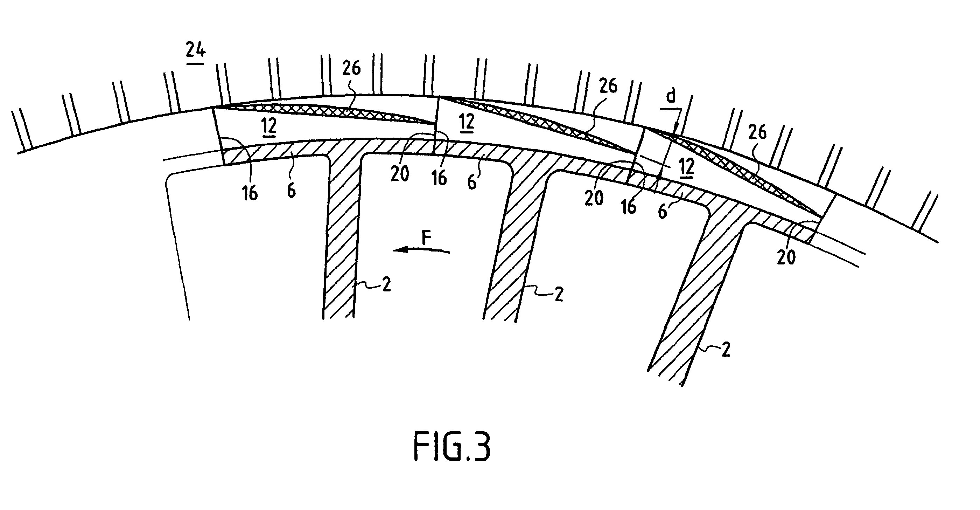

La figure 3 représente plusieurs aubes 2 montées sur un rotor non représenté placé dans un stator 24 et dont le sens de rotation est indiqué par une flèche F. Les aubes comportent toutes des léchettes 12 et 14. Les léchettes 12 et 14 sont disposées dans des plans parallèles perpendiculaires à l'axe de rotation du rotor et s'étendent périphériquement sur un angle égal à un pas angulaire inter-aube afin de former un labyrinthe avec la paroi interne du stator 24. Seules les léchettes 12 sont visibles sur cette figure 3.

La première portion d'extrémité 16 a une hauteur supérieure à la hauteur de la seconde portion d'extrémité 20 de manière à former un effet dent de scie d'une léchette 12 formée sur une première aube 2 à la léchette 12 formée sur l'aube 2 suivante. On choisit de préférence une différence de hauteur d égale à 0,2mm pour éviter une usure de la léchette 12.

Le stator 24 comporte sur sa paroi interne un matériau abradable qui au cours du fonctionnement va permettre au stator en s'abrasant de s'adapter à la forme des léchettes 12 et 14 frottant contre lui. Ainsi, les frottements se trouvent être diminués après adaptation des surfaces entre-elles, ce qui permet de diminuer les fuites.

Pour diminuer les fuites résiduelles, entre les sommets 26 des léchettes 12 et 14 et le stator 24, les sommets 26 présentent une surface convexe dans le sens de la circonférence. Les parties hachurées sur la figure 3 montrent la diminution des surfaces de fuite par rapport à l'art antérieur.

En particulier, la section du sommet 26 se présente sous la forme d'un arc de cercle 28 de centre O et de rayon R. La première portion d'extrémité 16 est reliée à la seconde 20 par le sommet 26 dont l'arc de cercle 28 est incliné, puisque les deux portions d'extrémité 16 et 20 sont de hauteur différente. Ainsi, le centre O de l'arc de cercle 28 est excentré d'une distance L par rapport au centre Ω de rotation des aubes lorsqu'elles sont montées sur le rotor 24. La distance L est au moins égale à la moitié de la longueur de la léchette, ce qui correspond à un demi-pas c'est-à-dire à la moitié de l'écartement entre deux aubes 2 consécutives.

En fait, l'axe médian x-x' de la léchette est écarté d'un angle α orienté par rapport à l'axe d'aube X-X' vers le côté extrados 10. L'orientation de l'angle α est donc opposé au sens de rotation du rotor 24 indiqué par la flèche F. Le rayon de courbure R de l'arc de cercle 28 peut être égal ou inférieur au rayon de la virole.

## Revendications

1. Aube (2) d'un étage mobile de rotor de turbine comportant un côté intrados (8) et un côté extrados (10) disposés de part et d'autre d'un axe d'aube (XX'), ladite aube (2) comportant en outre un talon (6) situé à son extrémité périphérique externe et au moins une léchette d'étanchéité (12, 14) formée sur ledit talon (6), ladite léchette d'étanchéité (12, 14) étant disposée transversalement aux côtés intrados (8) et extrados (10) et présentant une première portion d'extrémité (16, 18) côté extrados (10) et une seconde portion d'extrémité (20, 22) côté intrados (8), ladite première portion d'extrémité (16, 18) ayant une hauteur plus importante que la hauteur de ladite seconde portion d'extrémité (20, 22), ladite léchette présentant un sommet de léchette (26) entre lesdites première (16, 18) et seconde (20, 22) portions d'extrémité,
**caractérisée par le fait que** ledit sommet de léchette (26) présente une surface convexe (28) qui s'étend entre lesdites première et seconde portions d'extrémité.

2. Aube (2) selon la revendication 1, **caractérisée par le fait que** ladite surface convexe (28) présente une section transversale circulaire ayant un axe médian (xx'), un centre (O) et un rayon (R).

3. Aube (2) selon la revendication 2, **caractérisée par le fait que** ledit axe médian (xx') est écarté d'un angle (α) par rapport à l'axe d'aube (XX'), ledit angle (α) étant orienté du côté intrados (8) vers le côté extrados (10) et **par le fait que** le centre (O) est excentré d'une distance (L) mesurée perpendiculaire à l'axe d'aube (XX').

4. Aube (2) selon la revendication 3, **caractérisée par le fait que** la distance (L) est au moins égale à un demi-pas correspondant à la moitié de l'écartement entre ladite première portion d'extrémité (16, 18) et ladite seconde portion d'extrémité (20, 22).

5. Aube (2) selon l'une quelconque des revendications 1 à 4, **caractérisée par le fait que** la différence de hauteur (d) entre ladite première portion d'extrémité (16, 18) et ladite seconde portion d'extrémité (20, 22) est d'au moins 0,2mm.

6. Aube (2) selon l'une quelconque des revendications 1 à 5, **caractérisée par le fait qu'**elle comporte deux léchettes (12, 14).

7. Aube (2) selon la revendication 6, **caractérisée par le fait que** les deux léchettes (12, 14) sont sensiblement parallèles.

## Patentansprüche

1. Schaufel (2) einer Turbinenrotorstufe mit einer Druckseite (8) und einer Saugseite (10), die beiderseits einer Schaufelachse (XX') angeordnet sind, wobei diese Schaufel (2) ferner einen an ihrem äußeren Umfangsende befindlichen Ansatz (6) sowie mindestens ein an diesem Ansatz (6) ausgebildetes Dichtungs-Element (12, 14) aufweist, wobei dieses Dichtungs-Element (12, 14) quer zu der Druckseite (8) und der Saugseite (10) angeordnet ist und einen ersten Endabschnitt (16, 18) an der Saugseite (10) und einen zweiten Endabschnitt (20, 22) an der Druckseite (8) aufweist, wobei dieser erste Endabschnitt (16, 18) höher ist als der zweite Endabschnitt (20, 22), wobei dieses Element zwischen diesem ersten Endabschnitt (16, 18) und zweiten Endabschnitt (20, 22) einen Elementscheitel (26) aufweist,
**dadurch gekennzeichnet,**
**dass** der Elementscheitel (26) eine konvexe Oberfläche (28) aufweist, die sich zwischen dem ersten und dem zweiten Endabschnitt erstreckt.

2. Schaufel (2) nach Anspruch 1,
**dadurch gekennzeichnet,**
**dass** die konvexe Oberfläche (28) einen kreisförmigen Querschnitt mit einer Mittelachse (xx'), einem Mittelpunkt (O) und einem Radius (R) aufweist.

3. Schaufel (2) nach Anspruch 2,
**dadurch gekennzeichnet,**
**dass** die Mittelachse (xx') um einen Winkel (α) von der Schaufelachse (XX') verschoben ist, wobei dieser Winkel (α) von der Druckseite (8) zur Saugseite (10) hin ausgerichtet ist, und dass der Mittelpunkt (O) um eine im rechten Winkel zur Schaufelachse (XX') bemessene Strecke (L) verschoben angeordnet ist.

4. Schaufel (2) nach Anspruch 3,
**dadurch gekennzeichnet,**
**dass** die Strecke (L) mindestens gleich einem halben Schritt ist, was der Hälfte des Abstandes zwischen diesem ersten Endabschnitt (16, 18) und diesem zweiten Endabschnitt (20, 22) entspricht.

5. Schaufel (2) nach einem der Ansprüche 1 bis 4,
**dadurch gennzeichnet,**
**dass** der Höhenunterschied (d) zwischen diesem ersten Endabschnitt (16, 18) und diesem zweiten Endabschnitt (20, 22) mindestens 0,2 mm beträgt.

6. Schaufel (2) nach einem der Ansprüche 1 bis 5,
**dadurch gekennzeichnet,**
**dass** sie zwei Elemente (12, 14) aufweist.

7. Schaufel (2) nach Anspruch 6,
**dadurch gennzeichnet,**
**dsss** die Elemente (12, 14) im Wesentlichen parallel zueinander verlaufen.

## Claims

1. Blade (2) of a turbine rotor moving stage, comprising a lower side (8) and an upper side (10) disposed on either side of a blade axis (XX'), the said blade (2) additionally comprising a shroud (6) situated at its outer peripheral end and at least one sealing lip (12, 14) formed on the said shroud (6), the said sealing lip (12, 14) being disposed transversely to the lower (8) and upper (10) sides and having a first, upper side (10) end portion (16, 18) and a second, lower side (8) end portion (20, 22), the said first end portion (16, 18) having a height greater than the height of the said second end portion (20, 22), the said lip having a lip crown (26) between the said first (16, 18) and second (20, 22) end portions, **characterized in that** the said lip crown (26) has a convex surface (28) extending between the said first and second end portions.

2. Blade (2) according to Claim 1, **characterized in that** the said convex surface (28) has a circular cross section having a median axis (xx'), a centre (O) and a radius (R).

3. Blade (2) according to Claim 2, **characterized in that** the said median axis (xx') is separated from the said blade axis (XX') by an angle (α), the said angle (α) being orientated from the lower side (8) towards the upper side (10), and **in that** the centre (O) is offset by a distance (L) measured perpendicular to the blade axis (XX').

4. Blade (2) according to Claim 3, **characterized in that** the distance (L) is at least equal to a half-pitch corresponding to half the spacing between the said first end portion (16, 18) and the said second end portion (20, 22).

5. Blade (2) according to any one of Claims 1 to 4, **characterized in that** the height difference (d) between the said first end portion (16, 18) and the said second end portion (20, 22) is at least 0.2 mm.

6. Blade (2) according to any one of Claims 1 to 5, **characterized in that** it comprises two lips (12, 14).

7. Blade (2) according to Claim 6, **characterized in that** the two lips (12, 14) are substantially parallel.
